# EUROPEAN PATENT APPLICATION

(11) **EP 3 910 581 A1**
(43) Date of publication of application: **17.11.2021**
(21) Application number: 20174703.7
(22) Date of filing: 14.05.2020
(51) Int. Cl.: G06Q 20/38, G06Q 20/02, G06Q 20/12, G06Q 20/10, G06Q 20/22, G06Q 20/40

(54) **AN APPARATUS, METHOD AND COMPUTER PROGRAM FOR ASSOCIATING A FIRST PARTY AND A SECOND PARTY**

(71) Applicant: IPCO 2012 Limited, London EC4R 3AB (GB)
(72) Inventor: THALENJERI, Sudarshan, Bexleyheath, Kent DA7 4SP (GB); COLSTON, Mark Elliott, Watford, Hertfordshire WD17 3BZ (GB); THOMPSON, Andrew Paul, Wirksworth, Derbyshire DE4 4FB (GB); GOWDA, Anand Kumar Akkajalli Hanume, Basingstoke, Hampshire RG24 9SA (GB)
(74) Representative: D Young & Co LLP

(57) **Abstract**

A method of associating a first party and a second party is provided, the method comprising: receiving a first electronic message comprising information indicative of the first party; generating a first electronic token in response to receiving the information indicative of the first party; sending the first electronic token to the first party; receiving one or more second electronic messages from the second party, the one or more second electronic messages comprising the first electronic token and information indicative of the second party; generating a second electronic token in response to receiving the first electronic token and the information indicative of the second party from the second party; associating the information indicative of the first party, the second party and the second electronic token, the first party being identified on the basis of the first electronic token; and sending the second electronic token to the first party.

## Description

### BACKGROUND

### Field of the Disclosure

The present invention relates to an apparatus, method and computer program for associating a first party and a second party.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

Recent advances in technology, in particular electronic communication technology, have led to an increase in the volume of messages which are exchanged between parties. In many situations, a certain number of messages will be exchanged between the same two parties. That is, the same two parties may exchange a series of messages over a certain period of time. These messages may be directly linked with each other, or may be representative of different exchanges between the two parties. However, when two parties communicate in this manner, it will be appreciated that there may be a certain amount of persistent information which is repeated whenever there is an exchange of messages or information between the two parties. Repeating the exchange of the persistent information in this manner may increase the volume of information which is communicated across the network.

Furthermore, in certain situations, the information which is exchanged between two parties may be sensitive in nature. Accordingly, secure management of the information can become difficult, both when transmitting the sensitive information and once it has been received. That is, once a party has sent a message comprising sensitive information, that party loses control of the future management of that sensitive information. Accordingly, some parties may be reluctant to provide certain information in messages to other parties.

This issue may be exacerbated when a certain level of trust between the parties has not been established. That is, when two parties are exchanging messages for the first time, one or other of the parties may be unwilling to provide certain requisite information to the other party. This may lead to a certain reluctance in establishing connections with new parties.

It is an aim of the present disclosure to address these issues.

### SUMMARY

The present invention is defined by the appended Claims.

According to embodiments of the disclosure, an association between a first party and a second party can be established without the exchange of sensitive information between the parties, thus enhancing the level of security when forming an association between the respective parties.

Of course, it will be appreciated that the present disclosure is not particularly limited to these effects, there may be others.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 shows an apparatus for associating a first party and a second party according to embodiments of the disclosure;
Figure 2 shows a communication network for exchanging messages according to embodiments of the disclosure;
Figure 3 shows an example situation of associating a first party and a second party in accordance with embodiments of the disclosure;
Figure 4 shows an example of an association between a first party and a second party in accordance with embodiments of the disclosure;
Figure 5 shows an example situation of using the association between a first party and a second party in accordance with embodiments of the disclosure;
Figure 6 shows an example message flow between a first party and a second party in accordance with embodiments of the disclosure;
Figure 7 shows a method of associating a first party and a second party according to embodiments of the disclosure;
Figure 8 shows a method of associating a first party and a second party according to embodiments of the disclosure; and
Figure 9 shows a method of associating a first party and a second party according to embodiments of the disclosure.

### DESCRIPTION OF THE EMBODIMENTS

Referring now to the drawings, wherein like reference numerals designate identical or corresponding parts throughout the several views.

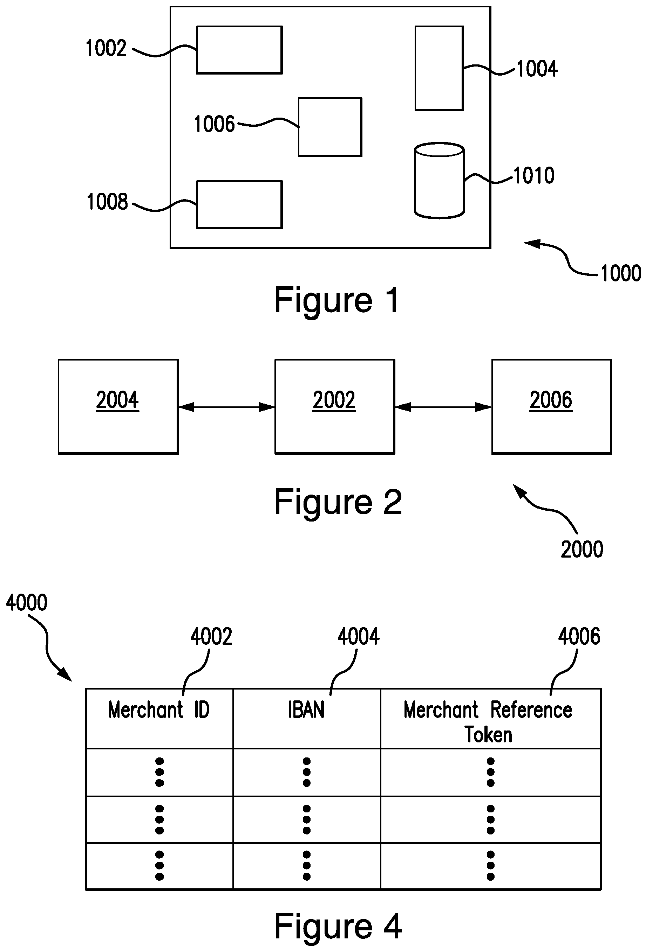

Figure 1 illustrates an apparatus for associating a first party and a second party according to embodiments of the disclosure. Typically, an apparatus 1000 according to embodiments of the disclosure is a computer device such as a personal computer or a terminal connected to a server. Indeed, in embodiments, the apparatus may also be a server. The apparatus 1000 is controlled using a microprocessor or other processing circuitry 1006. More generally, the apparatus 1000 is a data processing apparatus.

The processing circuitry 1006 may be a microprocessor carrying out computer instructions or may be an Application Specific Integrated Circuit. The computer instructions are stored on storage medium 1010 which may be a magnetically readable medium, optically readable medium or solid state type circuitry. The storage medium 1010 may be integrated into the apparatus 1000 or may be separate to the apparatus 1000 and connected thereto using either a wired or wireless connection. The computer instructions may be embodied as computer software that contains computer readable code which, when loaded onto the processor circuitry 1006, configures the processor circuitry 1006 to perform a method according to embodiments of the disclosure.

Additionally connected to the processor circuitry 1006, is a user input unit 1002. The user input unit 1002 may be a touch screen or may be a mouse or stylus type input device. The user input 1002 may also be a keyboard or any combination of these devices.

Communication circuitry 1004 is also coupled to the processing circuitry 1006. The communication circuitry 1004 may provide a connection to a Local Area Network or a Wide Area Network such as the Internet or a Virtual Private Network or the like. For example, the communication circuitry 1004 may be connected to infrastructure allowing the processor circuitry 1006 to communicate with other devices or infrastructure equipment in order to obtain or provide relevant data. For example, the communication circuitry 1004 may enable the apparatus 1000 to communicate with financial institutions in a banking network or the like. The communication circuitry 1004 may therefore be behind a firewall or some other form of network security.

Additionally coupled to the processing circuitry 1006, is a display device 1008. The display device, although shown integrated into the apparatus 1000, may be separate to the apparatus 1000 and may be an electronic display (e.g. liquid crystal display (LCD) or the like) or some kind of device allowing the user to visualise the operation of the system. In addition, the display device 1008 may be a printer or some other device allowing relevant information generated by the apparatus 1000 to be viewed by the user or by a third party.

### Communication Network:

The apparatus 1000 for associating a first party and a second party according to embodiments of the disclosure may be applied to the exchange of messages, and the formation of an association, between a consumer and a merchant. That is, embodiments of the disclosure enable a consumer to securely link an account, such as a bank account, with a merchant, such that the account may be used in future transactions with that merchant without the need to supply sensitive information regarding the account to the merchant. Accordingly, embodiments of the disclosure will be described with reference to this example situation. However, it will be appreciated that the present disclosure is not particularly limited to this specific example situation, and can be applied more generally to the formation of an association between first party and a second party as required. That is, the apparatus 1000 for associating a first party and a second party may be used in any situation whereby it is desired that messages are securely exchanged between two parties such that an association between two parties can be established.

Figure 2 shows an example of a communication network for exchanging messages between a merchant and a consumer which can be used in accordance with embodiments of the disclosure. In this example situation, an apparatus 2002 is located between a distributor 2004 and a financial institution 2006. That is, the distributor 2004 can exchange messages with the apparatus 2002. The financial institution 2006 can also exchange messages with the apparatus 2002. However, in this example situation, the distributor 2004 and the financial institution 2006 typically only exchange messages with each other through the common connection to apparatus 2002. It will be appreciated that apparatus 2002 may be an apparatus for associating a first party and a second party, such as apparatus 1000 described with reference to Figure 1 of the present disclosure. It will also be appreciated that processing steps carried out by the distributor 2004 and data received by or transmitted to the distributor 2004 are, in reality, carried out by and received by or transmitted to a data processing apparatus controlled by the distributor 2004. The data processing apparatus controlled by the distributor 2004 has the same components as the apparatus 1000 and may take the form of a server, for example. Similarly, processing steps carried out by the financial institution 2006 and data received by or transmitted to the financial institution 2006 are, in reality, carried out by and received by or transmitted to a data processing apparatus controlled by the financial institution 2006. The data processing apparatus controlled by the financial institution 2006 has the same components as the apparatus 1000 and may take the form of a server, for example. The terms "distributor" and "financial institution" may therefore actually refer to the data processing apparatus controlled by the distributor 2004 and financial institution 2006, respectively. At least a portion of actions implemented by each of the apparatus 2002, distributor 2004 and financial institution 2006 may be controlled by a consumer using a personal computing device (e.g. a smart phone) which exchanges data with the apparatus 2002, distributor 2004 and/or financial institution 2006 over a network.

Now, it will be appreciated that details regarding the type of financial institution 2006 are not particularly limited in accordance with embodiments of the disclosure. That is, financial institution may be any such institution which holds accounts for a party such as a consumer. In this situation, for example, the financial institution 2006 may be a bank or other such institution with which a consumer has an account. The account itself can be used to store funds belonging to the consumer, which can then be used by the consumer in transactions with a merchant for the purchase of goods and services. Of course, the financial institution 2006 may hold accounts for a large number of consumers. Each account held by the financial institution may therefore be identified by a unique identifier such as an international bank account number (IBAN) or the like. In this manner, during a transaction between a consumer and a merchant, the account belonging to that consumer can be identified through use of the unique identifier, such that funds from that specific account belonging to the consumer can be used in the transaction.

Furthermore, in this example situation, the distributor 2004 is a party on the merchant side of a transaction. That is, the distributor 2004 is a party, in communication with apparatus 2002, which allows certain goods or services to be exchanged for funds received from a consumer. In certain examples, the distributor 2004 may be the merchant themselves. Alternatively, the distributor may be a party which is acting on behalf of the merchant during the transaction between the merchant and the consumer.

In other words, in this example, the distributor 2004 communicates with apparatus 2002 on behalf of the merchant and the financial institution 2006 communicates with apparatus 2002 on behalf of the consumer.

A known transaction between merchant and a consumer may proceed as follows. First, the consumer identifies certain goods offered by the merchant as goods which the consumer would like to purchase. Then, the consumer makes a request to the merchant to purchase those goods in exchange for funds held in an account belonging to the consumer in financial institution 2006. That is, the consumer must provide information regarding the account held with financial institution to the merchant, such that the merchant can use those details in order to secure funds in exchange for the goods. Then the merchant supplies these details to the distributor 2004, who exchanges messages with the financial institution 2006 indicating that a consumer has requested a transaction to be completed between an account held by the consumer in financial institution 2006 and an account held by the merchant. The financial institution may then perform a sequence of steps to verify whether or not the consumer has authorised the transaction. In the event that authorisation is obtained, the financial institution will then instruct a transaction between the accounts of the consumer and the merchant to provide the merchant funds in exchange for the goods. Upon receipt of these funds, the merchant or the distributor 2004 may then distribute said goods to the consumer.

However, as noted above, the consumer may be reluctant to provide the requisite information regarding the account held at financial institution 2006 to the merchant in order to complete the transaction. That is, owing to the sensitivity of the information regarding the consumer account information, the consumer may be reluctant to provide the merchant with the information. This may particularly be the case if a consumer has not previously engaged in transactions with a certain merchant, and has thus not established a certain level of trust with the merchant.

Furthermore, in this known transaction, it is necessary for the consumer to provide the information regarding the account to the merchant each time the consumer wishes to use funds directly from the account to purchase goods from the merchant. Accordingly, the sensitive information regarding the consumer will be transmitted across the network a number of times, thus further increasing the potential for said information to be intercepted by a fraudulent party and subsequently used to perform fraudulent transactions.

However, according to embodiments of the disclosure, the consumer can securely link a specific account to a merchant enabling the consumer to reduce the sensitive information which needs to be transmitted to the merchant in order to use an account to purchase goods and services from the merchant in future transactions. In other words, the method according to embodiments of the disclosure allows a consumer to securely link a specific bank account to the merchant in order to simplify and streamline future transactions with that merchant.

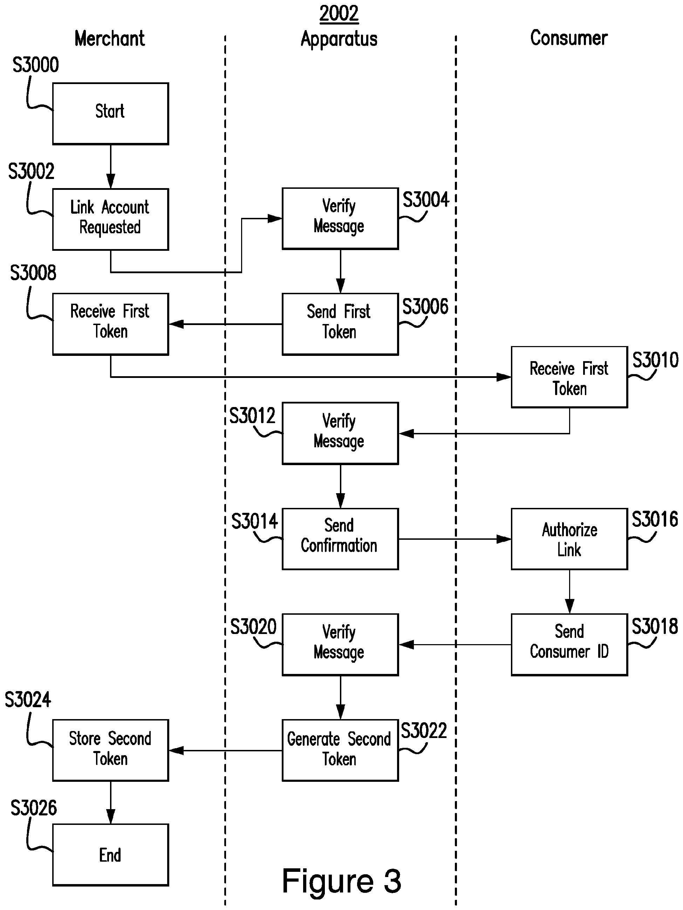

Figure 3 shows an example message flow between a first party and a second party in accordance when generating an association between that first party and second party in accordance with embodiments of the disclosure. That is, Figure 3 shows an example of the message flows between the distributor 2004, the apparatus 2002 and the financial institution 2006 described with reference to Figure 2, when generating an association between a merchant and a consumer according to embodiments of the disclosure.

In the example method shown in Figure 3, method steps S3000, S3002, S3008, S3024 and S3026 are performed on the merchant side by the distributor 2004. Method steps S3004, S3006, S3012, S3014, S3020 and S3022 are performed by apparatus 2002. Finally, method steps S3010, S3016 and S3018 are performed on the consumer side by the financial institution 2006.

Consider that, in this example, a consumer wants to link a specific bank account with a merchant, such that the consumer can use that bank account with that merchant in future transactions. The method starts at S3000 and proceeds to step S3002. In step S3002, the merchant receives a request from a consumer to link an account with the merchant. Upon receiving this request, the merchant informs the distributor 2004 who sends a link request message to apparatus 2002 on behalf of the merchant.

In step S3004, the apparatus 2002 may perform series of verification and/or validation processes to the message which is received from the distributor. These processes are performed such that apparatus 2002 can ascertain that the link request message is a genuine link request messages originating from an authenticated merchant. That is, the link request message comprises information which uniquely identifies the merchant from whom the message is sent (merchant identification information), and the verification and/or validation processes are performed in order to confirm that the request is a genuine request received from that merchant. For example, the method according to embodiments of the disclosure may comprise verifying a digital signature of the link request message. However, it will be appreciated that the method of performing the verification and/or validation processes according to embodiments of the disclosure is not particularly limited. For example, these processes could be performed through use of a digital signature, a public key/private key exchange, or the like.

Once apparatus 2002 has verified the link request message, the method proceeds to step S3006.

In step S3006, the apparatus 2002 is configured to generate a first token on the basis of the link request message received from the merchant. The first token is generated by apparatus 2002 in response to the request from the merchant, and is unique to that request. For example, the link request may comprise a unique identifier (which distinguishes the link request from all previous link requests) and the first token may comprise a cryptographic hash of the unique identifier. It will, however, be appreciated that the method of generating the first token itself is not particularly limited, and any such method may be used in accordance with embodiments of the disclosure, as long as the first token is uniquely associated with the link request message. For example, the token may be a unique code generated by the apparatus 2002 in response to receiving the link request message (e.g. generated using a suitable one time code generator) which is then associated with the received link request message. The token itself does not comprise any sensitive information regarding the merchant or the consumer.

Once generated, the first token is then sent, by apparatus 2002, to the distributor 2004.

Accordingly, in step S3008, the distributor 2004 receives the first token from the apparatus 2002. At this stage, the distributor 2004 may exchange a series of messages with the apparatus 2002 in order to verify the first token and/or to acknowledge receipt of the first token from the apparatus 2002. Once the first token has been received in this manner, the distributor 2004 is configured to securely exchange the token 2004 with the financial institution 2006. That is, the distributor 2004 passes the first token to merchant who will pass the first token to the consumer who has requested that the association be created. The consumer will then pass the first token to financial institution 2006. It will be appreciated that the method in which the first token is exchanged with the financial institution 2006 is not particularly limited, and will vary in accordance with the situation. That is, in certain embodiments, the first token may be passed directly to the financial institution 2006 without interaction from the consumer (through use of push messages or the like, for example).

Upon receipt of the token, in step S3010, the financial institution 2006 sends the first token to apparatus 2002 in a series of one or more messages.

In step S3012, the apparatus 2002 may perform verification and/or validation on the one or more messages received from the financial institution 2006. Such processing is performed in order to determine that the series of one or more messages received from the financial institution 2006 are genuine messages. This is again achieved through use of digital signatures, for example. However, as described above, the method of performing such verification and/or validation is not particularly limited, and any such method may be used in accordance with the situation to which the embodiments of the disclosure are applied.

Furthermore, regarding the first token, it will be appreciated that, according to embodiments of the disclosure, the token may be generated by apparatus 2002 at step 3006 with a certain expiry period. If the token is received by the apparatus 2002 from the financial institution 2006 after this given time duration, then the apparatus 2002 will reject the token and inform the financial institution 2006 accordingly.

It will be appreciated that, since the first token is unique, having been generated by the apparatus 2002 in response to the link request message from the distributor 2004 in step S3004 as described above, receipt of this first token from the financial institution 2006 enables the apparatus 2002 to securely identify the financial institution 2006 as acting on behalf of the consumer for which the merchant has initiated a link request message. That is, valid possession of the first token by financial institution 2006 enables the apparatus to determine that financial institution 2006 represents the party which should be associated with the merchant who initiated the link request in step S3002.

In step S3014, in response to determining that the first token received by the apparatus 2002 from the financial institution 2006 at step 3012 matches the first token generated by the apparatus 2002 at step 3006, apparatus 2002 accepts the first token received from the financial institution 2006 and sends a confirmation message to the financial institution 2006. The form of the confirmation message itself is not particularly limited, and represents confirmation by the apparatus 2002 that the first token has been accepted.

Upon receipt of the confirmation message, the financial institution 2006 may, in step 3016, request that the consumer provides authorisation of the request to link. That is, for additional security, the financial institution 2006 may, at this stage, request that the consumer authorises the linking of a specific bank account held by the financial institution with the merchant. That is, while acceptance of the first token indicates that the merchant has informed the financial institution that the consumer wishes to link a bank account with that merchant, the financial institution may wish to obtain independent authorisation from the consumer that the consumer wishes the association to be created. The means of obtaining authorisation from the consumer is not particularly limited. That is, obtaining authorisation from the consumer may comprise the use of biometric verification, password verification or the like. However, it will be appreciated that the consumer supplies this information directly to their respective financial institution 2006. Accordingly, consumer sensitive information, such as authorisation information, is not exchanged with apparatus 2002 or distributor 2004 in the formation of the merchant and bank account link enabled by the acceptance of the first token.

Once the consumer has verified that they wish the association to be formed, the financial institution 2006 sends consumer identification information to the apparatus 2002 (step S3018). In other words, once the consumer authorises the linking of their specific bank account with the merchant, the financial institution 2006 sends a confirmation message, including the consumer identification information, to apparatus 2002.

The form of the consumer identification information will vary in accordance with the situation to which the embodiments of the disclosure are being applied. However, in this specific example of forming an association between a merchant and a consumer, the consumer identification information may comprise information which identifies the bank account which the consumer wishes to link with the merchant. Such information could, for example, comprise an international bank account number (IBAN) or the like representing the consumer's account with the financial institution 2006.

Now, while this consumer identification information is sent by the financial institution 2006 to the apparatus 2002, it will be appreciated that the consumer identification information remains in the domain of the apparatus 2002, and is not passed to the merchant or the distributor 2004. Accordingly, the consumer can be satisfied that the sensitive consumer identification information will remain secure.

Upon receipt, by apparatus 2002, of the one or more messages providing the consumer identification information, the apparatus 2002 may again perform verification and/or validation of said messages in step S3020. That is, the apparatus 2002 can verify (via a digital signature or the like) that the consumer identification information is genuine consumer identification information received directly from the financial institution 2006.

At this stage in the process, it will be appreciated that apparatus 2002 has securely obtained the requisite information to establish a link or association between the merchant and the consumer. That is, the apparatus 2002 has obtained the merchant identification information in the link account request message in step S3004, and the consumer identification information (such as the IBAN of the account to be linked with the merchant) in step S3020. Accordingly, the apparatus 2002 establishes the association, or link, between the merchant and the consumer, and securely stores this information in a storage unit (such as element 1010 of apparatus 1000, for example).

Next, the apparatus 2002 generates a second token in response to receiving the consumer identification information. The method of generating the second token is not particularly limited. That is, for example, the apparatus 2002 may tokenise a combination of the merchant identification information (which uniquely identifies the merchant) and the consumer identification information (which uniquely identifies the consumer) using a cryptographic hash. Alternatively, the apparatus 2002 may generate a token uniquely representative of the merchant identification information and consumer identification information combination without use of the merchant identification information and consumer identification information itself (e.g. using a one time token generator or the like). In either case, the second token itself comprises no information regarding either the merchant or consumer. That is, the second token is a piece of data that has no meaning on its own, but is used to uniquely represent the merchant and consumer association which has been formed. Apparatus 2002 then securely stores the second token with the association between the merchant and the consumer.

Figure 4 shows an example of the association between a specific merchant ID 4002 (an example of merchant identification information), the IBAN 4004 (an example of consumer identification information) and the second token 4006 (which may be referred to as a merchant reference token, in this example) which may be securely stored by apparatus 2002 (e.g. in the form of a look up table) in accordance with embodiments of the disclosure. From this example, it can be seen that the merchant reference token 4006 can be used as a reference to a specific merchant ID 4002 and consumer IBAN 4004. That is, each merchant reference token 4006 uniquely identifies a specific combination of merchant ID 4002 and consumer IBAN 4004 in table 4000. However, as noted above, the merchant reference token 4006 itself comprises no information regarding either the merchant or the consumer. Rather, it is possession of the merchant reference token 4006 which enables reference to the information in table 4000 to be performed. However, it will be appreciated that the method of storing the association is not particularly limited in this respect. The association of the merchant reference token with the merchant ID 4002 is possible because the apparatus 2002 records the specific merchant ID included in the link request message in response to which the first token and, upon acceptance of the first token at step 3014 and authorisation of the consumer at step 3016, the second token, are generated. The association of the merchant reference token with the IBAN 4004 is possible because the apparatus 2002 records the IBAN provided by the financial institution at step 3018. The merchant reference token is uniquely associated with the merchant ID and IBAN combination.

Once the merchant reference token and the association between the merchant and consumer (or, more specifically, a bank account of the consumer) have been generated, the apparatus 2002 sends the merchant reference token to the distributor 2004.

The distributor 2004 passes the merchant reference token to the merchant, who thus stores the merchant reference token alongside information indicating the consumer for whom that merchant reference token has been generated (step S3024). The method of forming the association between the first party and the second party ends with step S3026.

It will be appreciated that, according to embodiments of the disclosure, once the association between the merchant and the consumer has been created, the merchant can use the merchant reference token as a reference to the association with the consumer (that is, the link to the bank account of the consumer). For example, the merchant can, on request of the consumer, supply the merchant reference token (as a request token) to the apparatus 2002 along with information regarding the merchant (such as merchant identification information) and/or information regarding a requested transaction in order to instruct a payment from the account the consumer has associated with the merchant to the merchant.

Upon receiving the request, the apparatus 2002 will, according to embodiments of the disclosure, authorize the requested transaction between the merchant and the consumer when it is determined that the merchant identification information and the merchant reference token matches the association between the merchant identification information and merchant reference token stored by apparatus 2002. If merchant reference token supplied by the merchant when requesting a transaction does not match a merchant reference token stored by the apparatus 2002, or if that merchant reference token exists but is received from a merchant with merchant identification information other than the merchant identification information with which that merchant reference token is associated, then apparatus 2002 will not authorise a transaction.

Furthermore, according to embodiments of the disclosure, apparatus 2002 may send a message to at least the request party (the merchant) comprising information indicative of a refusal when the information indicative of the request party and the request token do not match an association.

Accordingly, only the merchant with whom the consumer has created the association can validly request a transaction using the merchant reference token.

In addition, according to embodiments of the disclosure, at least one of the merchant, distributor 2004, apparatus 2002 and/or financial institution 2006 may request specific authorisation of the requested transaction from the consumer prior to the transaction being authorised by apparatus 2002 even in the event it is determined that the merchant has valid possession of the merchant reference token. This will be described in more detail below.

From the above description, it will be appreciated that the exchange of the first token from the distributor 2004 to the financial institution 2006 in step S3008 represents the only direct exchange of information between the distributor 2004 and the financial institution 2006 required to establish the association between these parties in accordance with embodiments of the disclosure. Moreover, as noted above, the first token itself does not comprise any information regarding the parties themselves. Rather, the first token is used as a secure means for authenticating the parties and establishing their intention to form an association. As such, the parties can establish an association without performing any exchange of sensitive information, thus enhancing the level of security when forming an association between the respective parties.

Furthermore, the second token which is generated enables one or other of the parties to use that token in subsequent exchanges in order to reference securely held sensitive information regarding the parties, such that the sensitive information need not be included in the future exchanges. Moreover, because the sensitive information is held by the apparatus 2002, the sensitive information regarding one or other of the parties need not be exchanged with the other party, even in the subsequent exchanges. That is, in the above described example, once the association has been created, the merchant reference token enables the merchant to use the information regarding the consumer's account (such as the IBAN) to process a transaction without the merchant having direct access to that information at any stage.

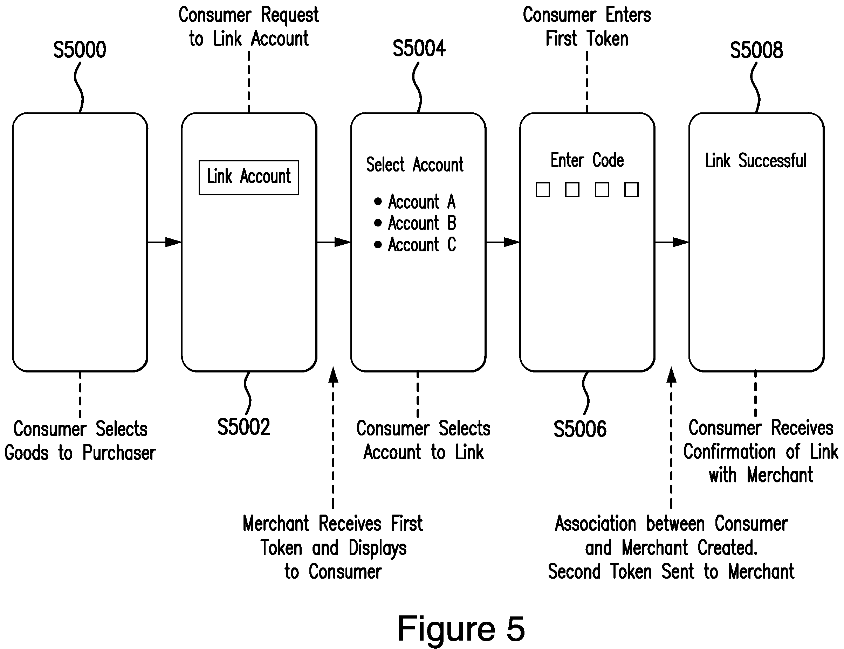

A specific example of forming an association between a first and second party will now be described in more detail with reference to Figure 5 of the present disclosure.

### Linking an Account:

Figure 5 shows an example situation of associating a first party and a second party in accordance with embodiments of the disclosure. The example situation of Figure 5 is described from the consumer side of the method of Figure 3 described above.

In this specific example, consider that a consumer (the second party) wishes to form an association with a merchant (the first party). That is, the consumer wishes to link an account, such as a bank account, with the merchant, such that the consumer can use that account in future transactions with the merchant without having to repeatedly provide the merchant with details regarding the account in future transactions, or in fact providing the merchant with details regarding the account at any stage at all.

Consider that, in this example, a consumer is using a browser on a consumer device, such as a personal computing device, a personal mobile telecommunication device or the like, to navigate across pages of a website offered by a merchant. In step S5000, the consumer navigates the pages of the website offered by the merchant in order to identify particular goods or services which the consumer would like to purchase from the merchant. In this example, once the consumer has identified certain goods which they would like to purchase, the consumer may select those items and provide an indication that they would like to proceed to payment. Accordingly, the browser of the consumer device may navigate to a payment webpage provided by the merchant.

At this stage, the consumer may be requested to log into the merchant website. That is, if the consumer has previously registered with the merchant, then the consumer may be requested to provide certain credentials in order to log into the secure area of the merchant's website and view payment options specific to that consumer. Alternatively, if the consumer has yet to register for an account with the merchant, then the consumer may be requested to create an account with the merchant. In this manner, the merchant can create a specific record for a given consumer. The record may comprise information regarding payment options or delivery information specific to that consumer.

Once the secure payment area of the merchant's website has been accessed, the consumer may be presented with a number of distinct payment options. That is, the consumer may select a method of payment to use to provide the merchant with the required funds to proceed with the transaction in exchange for the selected goods. In this example the consumer may select an option to pay by bank account. In other words, the consumer selects an option on the payment webpage of the merchant that indicates that the consumer wishes to pay for the goods using funds from a bank account held in a financial institution, such as financial institution 2006 described with reference to Figure 2 of the present disclosure.

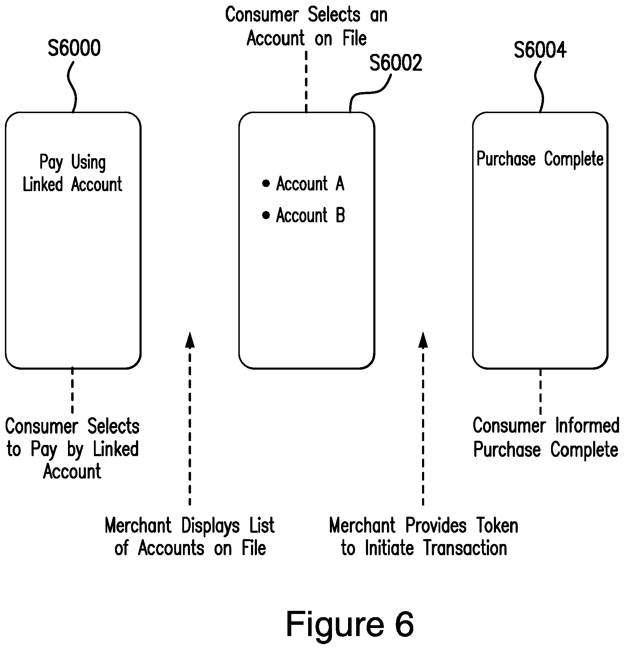

Having made the selection to pay by an account, the consumer may be presented with options of available bank accounts which have been linked to the merchant. That is, a list of stored bank accounts may be presented to the consumer for selection by the consumer when proceeding with the transaction. Use of a previously stored bank account to proceed with the transaction will be described later with reference to Figure 6. However, in this situation, it is assumed that there are no previously linked accounts for that consumer available with that merchant. Accordingly, assuming that the consumer intends to proceed with using a bank account to pay for the selected goods, the consumer may be presented with an option to initiate the functionality to link an account with that merchant. In this example, in step S5002, the consumer thus selects the option to link an account with the merchant. When this selection is made, a specific application, such as pay by bank application or the like, may be initiated on the consumer's personal computing device in order to perform the processing required to securely link a bank account with the merchant. Furthermore, according to embodiments of the disclosure, the consumer may launch the pay by bank application on a device other than the initial consumer personal computing device, if they wish to perform the linking (and any subsequent transaction) on a device other than the initial device which they used to navigate the website of the merchant.

Now, while the initiation of the request to link an account is described here as being performed after the consumer has identified goods which they wish to purchase, the present disclosure is not particularly limited in this regard. That is, the request to link an account may, alternatively, be initiated by the consumer prior to, and independent of, any request to purchase goods. That is, the consumer may request to link an account with a merchant for use in future transactions which the consumer may wish to make with the merchant, for example. The timing of the request to link an account is therefore not particularly limited, and will vary in accordance with the situation to which the embodiments of the disclosure are applied.

In response to the consumer selecting the link account option in step S5002, the distributor 2004 (which is in communication with the server (not shown) hosting the merchant website) sends the link request message to the apparatus 2002 on behalf of the merchant (as described with reference to Figure 3). In this manner, the message sent to the apparatus 2002 indicates that a request to link an account with the merchant has been initiated. In response, the apparatus 2002 sends a first token back to the merchant In one example, the first token is a MasterCard ® pay by bank application (PBBA) code. The first token is generated by apparatus 2002 in response to the request from the merchant, and is unique to that request. However, the token does not comprise any sensitive information regarding either the merchant or the consumer. The distributor 2004 then passes the first token to the merchant.

Once the merchant receives the first token from the apparatus 2002, the merchant website may present the token to the consumer on the consumer device. For example, a display screen of the consumer device may be utilized to display the token. Accordingly, in response to initiating the functionality to link an account with the merchant, the consumer is presented with (or otherwise receives) the first token.

Returning now to the consumer personal computing device, once the consumer has initiated the functionality to link an account, the consumer may be presented with options to select which account they would like to link, or associate, with the merchant. It will be appreciated that this is performed independently of the merchant. For example, the identification of the bank accounts which are available for linking with the merchant may be performed by a specific banking application provided by the financial institution 2006 with which the consumer has an account (or a suitable third party authorised by that financial institution). This is installed on the consumer's personal computing device in advance and is launched when the request to link a bank account has been made in step S5002 on the merchant website. Accordingly, if the consumer has a number of accounts, those accounts will be presented to the consumer. Within this application, the consumer can then select an account to link with the merchant.

Once the consumer has selected the account which they wish to link, in step S5006 the consumer is then presented with an option to enter the first token. Upon correctly entering the first token (as displayed by the merchant website), the link selection is complete.

In an embodiment, the merchant website may be displayed on a separate device to the personal device on which the banking application is installed (e.g. the merchant website may be displayed on a desktop computer whilst the banking application is installed on the consumer's smart phone). The process, however, works in exactly the same way (as long as the server hosting the merchant website and the banking application are each able to communicate with the apparatus 2002). The only difference is that the user will have to manually open the banking application and select a suitable option (e.g. a "PBBA" virtual button presented by the banking application) to display the first token entry screen shown in step S3006. In another embodiment, if the separate application, such as the bank application, is initiated on the same device that the consumer uses to navigate the merchant website, then the token may be automatically retrieved from the web browser by the separate application. In this case, the consumer does not have to manually input the token once the bank account has been selected (rather, the link selection is completed as soon as the user selects the account they wish to link at step S5004 and step S5006 is skipped).

Once the account to be linked has been selected, the banking application on the consumer's computing device sends at least one message to the apparatus 2002, the at least one message comprising the consumer identification information (e.g. IBAN) and the first token which was passed to the banking application (either automatically or by the user manually entering the first token). This message may be sent to the apparatus 2002 via the financial institution 2006 which holds the account selected by the consumer in step S5004 (and which provides the banking application). In embodiments, the consumer identification information is only transmitted once the consumer has provided authorisation (e.g. through entering a banking application passcode or providing a biometric marker (e.g. facial photograph or fingerprint) previously set up for use with the banking application (as mentioned with reference to step S3016 in Figure 3)).

Since the first token is unique to the link request message generated by the specific merchant identified in the link request message, upon receipt of the first token from the consumer, the apparatus 2002 realises that the consumer wishes to form an association with the specific merchant. In other words, the first token received from the consumer, being the same as the first token which was generated by the apparatus in response to the link request from the merchant, can be subsequently used by the apparatus 2002 in order to identify the merchant with whom the consumer wishes to form an association.

As previously mentioned, in this example, the consumer identification information indicative of the consumer which is sent by the consumer in the at least one message to the apparatus 2002 is information which uniquely identifies the account, or accounts, the consumer would like to link with the merchant. The consumer identification information may be an international bank account number (IBAN) or the like. Such information identifying the account which the consumer would like to link with the merchant may be considered sensitive in nature, since such information could be vulnerable to fraudulent use. However, according to the embodiments of the disclosure, the consumer does not need to provide this information to the merchant at all. Rather, the information is passed only to apparatus 2002 (which is operated by a party trusted by both merchants and consumers, such as a party subjected to government and/or financial institution network regulations). Moreover, it will be appreciated that the messages and communication between the consumer and the apparatus 2002 may be encrypted in order to further improve security.

Following receipt and verification and/or validation of the consumer identification information, apparatus 2002 generates a second token on the basis of the consumer identification information and merchant identification information (as previously explained). This second token is distinct from the first token. Moreover, as noted for the first token, the second token itself comprises no specific information regarding the consumer or merchant. The apparatus 2002 then stores the second token in association with the merchant identification information and the consumer identification information, as previously discussed.

Once generated, the second token is then sent to the merchant. As described above, the merchant then retains the token for use in future transactions with the consumer. In other words, the second token is representative of an association between the merchant and the account of the consumer.

Returning to the consumer computing device, in step S5008, the consumer then receives an indication that the account has been successfully linked with the merchant. This indication may be received from the merchant (in the browser of the computing device used to navigate the merchant's website) or in the pay by bank application launched on the consumer's device, for example.

In summary, the above described example enables a consumer to link their bank account to a specific merchant for use with transactions with that merchant. When the consumer initiates a link request, the consumer is presented with a first token, such as a PBBA code, which the consumer then passes to the apparatus 2002 along with information of the account which the consumer wishes to link with the merchant (such as an IBAN). The IBAN and specified merchant identification information is then tokenised by the apparatus 2002 to form a second token. An association between the second token, the merchant and the IBAN is then created by the apparatus 2002 and securely stored by that apparatus. Then, the second token is passed to the merchant to be stored against the consumer's merchant record.

In this manner, the consumer can securely create an association between an account and the merchant, such that the account can be used in future transactions to supply funds to the merchant in exchange for desired goods. The association can be created without any sensitive information, such as the IBAN, being passed from the consumer to the merchant. Accordingly, the consumer can have confidence to create an association with a merchant without compromising their sensitive information.

A specific example of using the association between the merchant and the consumer which has been created to purchase goods from the merchant will now be described with reference to Figure 6.

### Payment:

Once an account has been associated with a merchant, as described with reference to Figure 5 above, the consumer may use such an association, such as an account on file, to securely purchase goods or services provided by the merchant.

Figure 6 shows an example situation of using the association between a first party and a second party in accordance with embodiments of the disclosure.

Consider that, similar to the example described with reference to Figure 5 of the present disclosure, a consumer is again using a browser on a consumer device, such as a personal computing device, to navigate pages of a website offered by a merchant. In this example, the consumer navigates the pages of the website offered by the merchant in order to identify particular goods which the consumer would like to purchase from the merchant. Once the consumer has identified certain goods which they would like to purchase, the consumer may select those items and provide an indication that they would like to proceed to payment. Accordingly, the browser of the consumer device may navigate to a payment webpage provided by the merchant. At this stage, the consumer may be requested to provide certain authentication credentials in order to securely log into the payment area.

Now, in this example, when the website of the merchant proceeds to a payment page, the consumer is presented with the option to pay by using a linked account (this account having been linked with the merchant in accordance with a process such as that described with reference to Figure 5 above). The consumer then selects to pay for the goods by using a linked account in step S6000. The option to pay using a linked account may be presented as one of a plurality of different payment options (the others including a credit or debit card payment, for example).

When the consumer makes this selection to pay using a linked account, the consumer is presented with a list of accounts which have been associated with the merchant. If the consumer selects the option to pay using a linked account without having previously associated an account with that merchant, the consumer will be requested to follow the steps described with reference to Figure 5 of the present disclosure for creating an association between an account of the consumer and the merchant. However, provided that the consumer has previously linked at least one account with the merchant, the process will proceed to step S5004.

At this stage, the consumer is presented with the list of accounts which have been previously linked with the merchant. That is, the merchant has stored a list of linked accounts for that consumer, and presents the list of accounts to the consumer for selection. According to embodiments of the disclosure, the list of accounts may be stored against a pseudo-name chosen by the consumer (e.g. via adjustable settings in a user account area of the merchant's website) to indicate the specific account which the second token is associated with. In this manner, in the case whereby the consumer has several different accounts, the consumer can readily identify the account with which they wish the payment to proceed. However, it will be appreciated that, as described above with reference to Figure 3 of the present disclosure, the merchant does not store any sensitive information regarding the accounts which the consumer has linked (such as the account number or the like). Rather, the merchant only receives, and stores, the second token (the merchant reference token) against the consumer record in accordance with embodiments of the disclosure.

In other words, according to embodiments of the disclosure, the consumer can simply select a linked account which they wish to use in a transaction with the merchant, without entering the account number or providing the merchant with the account information. In step S6002, the consumer selects an account of the accounts on file (the accounts linked or associated with the merchant) for use for payment in the transaction to purchase the selected goods.

It will be appreciated that, at this stage, the merchant provides a merchant reference token stored in association with the selected account to the apparatus 2002 along with information regarding the transaction. For example, the merchant may provide information that a transaction of certain value has been requested by the consumer along with the merchant reference token which has been selected by the consumer. Again, it will be appreciated that the merchant does not provide, or receive, any information regarding the consumer's account. Rather, the merchant simply provides the merchant reference token to the apparatus 2002 along with details of the requested transaction. It will be appreciated that the information regarding the transaction is not particularly limited to the value of the transaction. Other information regarding the transaction may be provided to the apparatus 2002 by the merchant alongside the merchant reference token. For example, the merchant may provided information regarding the type of transaction which has been requested, the goods which the transaction relates to, time information regarding the transaction or the like. In fact, any such information may be provided by the merchant to the apparatus 2002 with the merchant reference token in accordance with the situation to which the embodiments of the disclosure are applied.

The apparatus 2002 can then identify, by virtue of the merchant reference token (as described with reference to Figure 4 above) the consumer account from which the funds to perform the requested transaction should be retrieved. It should be noted that, at this stage, a number of operations may be performed by the apparatus 2002 prior to requesting the transaction from the consumer's account. That is, according to certain embodiments, the apparatus can verify that the received merchant reference token matches a merchant reference token on record. Furthermore, the apparatus can verify that the specific merchant from whom the merchant reference token is received matches the merchant with which that merchant reference token is associated. That is, if the merchant reference token is received from a merchant who does not match the merchant associated with the merchant reference token, then the apparatus 2002 may refuse to authorise the transaction. In this manner, fraudulent use of a merchant reference token can be reduced.

Once the apparatus 2002 is satisfied that the received merchant reference token is a genuine merchant reference token received from the merchant with which that token is associated, the apparatus 2002 authorises the transaction to proceed.

Accordingly, the apparatus 2002 can send at least one message to the financial institution 2006 which holds the account identified by the merchant reference token requesting that a transaction is performed in order to provide funds to the merchant.

As such, funds to perform the transaction are taken from the consumer account once the consumer has selected, in step S6002, an account on file which has been linked with the merchant. In this example, no further details are required to be provided by the consumer and no specific authentication of the request by the consumer is required. That is, provided the consumer has logged in to the secure area of the merchant's website and selected the option to pay using a linked account, then, when the apparatus has received the merchant reference token from the merchant, the apparatus will instruct a transaction to proceed without further instruction from the consumer. This simplifies the consumer purchase experience.

However, in certain examples, either the merchant and/or the consumer may have provided an indication that a transaction should not be initiated without further authentication from the consumer. Alternatively or in addition, such additional authentication may be requested on a random sample of transactions, or on transactions which have been identified as a higher risk transaction. In these cases, when the merchant reference token has been identified, the consumer may have to provide further authorisation that the transaction is a genuine transaction which should be initiated. In accordance with embodiments of the disclosure, such additional authorisation may be provided in the form of secure password authentication, biometric authentication or the like (e.g. as implemented by the banking application on the consumer's personal computing device in combination with suitable hardware included on the consumer's personal computing device in response to the financial institution receiving the requested transaction). Receiving additional authentication of the consumer in this manner further improves the security of pay by bank transactions using the merchant reference token.

Once the transaction between the merchant and the consumer is complete, the consumer is presented, in step S6004, with information that the purchase has been completed. This confirmation of purchase may, in examples, be provided by the merchant website. The merchant will dispatch the requested goods to the consumer.

### Link and Pav:

While the above methods of associating or linking an account and subsequently paying with an account have been described as separate and distinct processes, it will be appreciated that the present disclosure is not particularly limited in this regard. That is, according to embodiments of the disclosure, the consumer may perform the linking of an account and the subsequent use of that account in a single interaction with the merchant.

In other words, it will be appreciated that the purchase of goods using a linked account may be performed directly after the link has been performed, or may, alternatively, be performed at a certain time after the formation of the link. The present disclosure is not particularly limited in this regard.

### Technical Advantages:

According to the above described embodiments of the disclosure, the consumer can securely link a specific account to a merchant enabling the consumer to reduce the amount of sensitive information which needs to be transmitted to the merchant in order to use an account to purchase goods and services from the merchant in future transactions. That is, the consumer can store an account on file such that the account can be easily used in order to make a payment to the merchant without having to enter sensitive information regarding the account at the time of payment. Moreover, sensitive information regarding the consumer and the account is retained in a secure domain, and need not be provided to the merchant at all.

More generally, according to embodiments of the disclosure, an association between a first party and a second party can be established without the exchange of sensitive information between the parties, thus enhancing the level of security when forming an association between the respective parties.

Of course, the present disclosure is not particularly limited to these advantageous effects, there may be others.

### Additional Modifications:

While the method of associating a first party and a second party has been described with reference to Figures 3 to 6 above, it will be appreciated that the present disclosure is not particularly limited in this regard. In particular, the following adaptations and modifications may be made to the method described with reference to Figures 3 to 6 in accordance with embodiments of the disclosure.

According to embodiments of the disclosure, an association can be created between a merchant and a consumer, such that the consumer can request to securely store an account on file with the merchant without the merchant storing any sensitive information regarding the consumer and/or the account. Subsequently, the consumer may request the merchant uses the association in order to retrieve funds for a transaction, for example, without supplying information regarding the account to the merchant and without repeating the transmission of secure information regarding the account. However, in certain situations, the consumer may desire that a certain degree of limitation is placed on the situations in which the merchant may use the association, that is, the merchant reference token, to request a transaction to proceed. That is, the consumer may desire an enhanced level of control over subsequent use of the association by the merchant to perform transactions.

As such, according to embodiments of the disclosure, the one or more messages sent by the financial institution 2006 to the apparatus 2002 (comprising the consumer identification information such as the IBAN) may comprise information indicative of one or more limits, and the method according to embodiments of the disclosure may comprise further associating the identified limit(s) with the merchant ID, IBAN and merchant reference token stored by the apparatus 2002.

Consider an example whereby a consumer C has created an association with a first merchant M. Merchant M will store a merchant reference token which can be used to request a transaction from a bank account of consumer C. That is, when merchant M provides the merchant reference token to apparatus 2002 with information regarding a requested transaction, apparatus 2002 will initiate a transaction from the account of consumer C to merchant M. In order to increase the level of security, the consumer C may indicate that all transactions which are requested by merchant M using the merchant reference token must also receive authentication from the consumer C. However, requesting authentication in each case may be cumbersome and increase frustration of the consumer C when requesting transactions with merchant M. As such, according to embodiments of the disclosure, consumer C may provide additional information when creating the initial association regarding the situations, values and/or types of transaction for which the merchant M may use the association and merchant reference token. Then, if a transaction is received from that merchant M which falls outside the authorised limits provided by the consumer C, the apparatus 2002 will not initiate a transaction from the consumer C's account. In other words, according to embodiments of the disclosure, the apparatus 2002 will only authorize a transaction between a merchant and a consumer when it is determined that one or more parameters of the requested transaction are within, or conform to, the respective predefined limits. Additional information indicative of the predefined limits is stored and associated with the merchant ID, IBAN and merchant reference token stored by the apparatus 2002.

It will be appreciated that the form of the additional information is itself not particularly limited, and may vary in accordance with the situation to which embodiments of the disclosure are being applied. For example, the additional information (also referred to as mandate information, in certain examples) may comprise information regarding at least one of a maximum value of the transaction (such as transactions up to a value of £50) a frequency of transactions (such as five transactions per day), a number of transactions (such as ten transactions since the association has been established or ten transactions since authentication has previously been obtained), certain types of goods the transaction may relate to (such transactions to purchase groceries, but not to purchase restricted items such as alcohol) or the like for which the association can be used. Where necessary, parameters of the transaction which are compared against the additional information in order to determine whether the transaction falls within the allowable limits (such as the types of goods the transaction relates to) may be received from the merchant when the merchant provides the apparatus 2002 with the merchant reference token. It will be appreciated that this additional information is likewise associated with the merchant identifier (merchant identification information, e.g. merchant ID), the consumer identifier (consumer identification information, e.g. IBAN) and the merchant reference token by the apparatus 2002. Accordingly, transaction information received from the merchant M alongside the merchant reference token can be compared with the additional information prior to instructing a transaction between the consumer C and the merchant M.

In the case of a maximum value of the transaction, for example, when the value of the transaction is below that limit, then the transaction may be initiated by apparatus 2002 without further interaction with the consumer C (provided that the merchant reference token is genuine, and matches the merchant M with which that token is associated). However, when the value of the transaction is above, or does not conform to, the transaction limit which has been set by the consumer C, then the apparatus 2002 will seek further authorisation and/or authentication from the consumer C prior to proceeding with the transaction. In this case, one or more messages may be sent to the merchant M and/or the consumer C indicating that the requested transaction requires further specific authorisation and/or authentication, or indicating that the requested transaction has been refused, depending on the situation.

Such limits do not prevent the consumer C from purchasing the goods from the merchant M by an alternative payment method. Rather, the limits place restrictions on the ability of the merchant M to request a transaction using the merchant reference token. Thus, the limits increase the level of security and control the consumer C (or, more generally, the second party) has over the use of the association by the merchant M (or, more generally, the first party).

It will be appreciated that the actions taken by the apparatus 2002 when a transaction is requested which falls outside the limits defined by the additional information are not particularly limited. That is, as described above, in certain examples the apparatus 2002 may seek additional authorisation and/or authentication from the consumer C prior to initiating a transaction. Alternatively, the apparatus 2002 may automatically refuse a transaction which falls outside the limits defined by the additional information (when a transaction is requested which exceeds the upper limit of the association, for example). Alternatively or in addition, once a transaction has been requested which falls outside the limits defined by the additional information set by the consumer C, the apparatus may refuse any subsequent transaction request from that merchant M, even if the subsequent transaction falls within the limits set by the consumer C, until the consumer C has provided authorisation and/or authentication to unblock the association. In this manner, any subsequent transaction received after a potentially fraudulent attempt to use the merchant reference token can be blocked. This further improves the security of the system.

In other words, according to embodiments of the disclosure, the apparatus 2002 may send a further message to the financial institution 2006, the further message comprising information requesting specific authorization of the transaction, when the requesting merchant and the request token match those of the association stored by apparatus 2002 (e.g. in the form of the look up table of Figure 4) and when a parameter of the requested transaction exceeds one or more predefined limits indicated by additional information stored with that association (e.g. as one or more additional columns in the look up table). In this case, apparatus 2002 will only authorize a transaction between the consumer C and the merchant M when specific authorization is received from the consumer C.

Accordingly, the additional information may be used to determine whether a consumer C will be required to authorise certain future transactions. This provides an enhanced level of security and control to the consumer C.

In an embodiment, if no additional information is set when the association is created, then authorisation and/or authentication of the consumer C may still be requested in certain situations such as in high risk transactions or when specifically requested by the financial institution and/or merchant (e.g. a particular financial institution or merchant may require further authorisation of all transactions for any of its customers exceeding a certain value). Moreover, it will be appreciated that specific authorisation and/or authentication may be requested by one or more of the parties to the transaction (e.g. the merchant or the financial institution) even in the event that the requested transaction falls within the limits of the transactions set by the consumer C and stored by the apparatus 2002. For example, limits may be independently defined by the merchant and/or financial institution (e.g. the merchant's website and/or banking application may be programmed to seek further authorisation from the user for transactions of a certain size, such as asking the user to enter a password or provide a biometric marker). It will furthermore be appreciated that, even when limits determining when authorisation of a transaction is required are defined centrally at the apparatus 2002 (e.g. as additional columns in a look up table such as that of Figure 4), the action of authorisation (e.g. prompting for a password or biometric marker) may be implemented via the merchant's website and/or banking application (which are in communication with the apparatus 2002). The definition of the limits themselves may be provided by the user to the apparatus 2002 via the banking application (along with the consumer identification information, e.g. the IBAN).

Additionally, according to embodiments of the disclosure, the consumer C may request the creation or modification of the additional information at a stage after the creation of the association between the merchant M and consumer C. That is, the consumer C may send one or more messages (e.g. via their banking application) comprising a modification request to the apparatus 2002 requesting a change to the additional information stored with the association. For example, the consumer C may decide to increase the maximum value of the transaction which the merchant M can request without authentication. In this case, any transaction request received after the change in the additional information will be compared against the updated additional information prior to allowing a transaction to proceed. This provides a further increase in the level of control the consumer C has over the association.

In other words, according to embodiments of the disclosure, the method may comprise receiving a modification request from the consumer C and modifying the association between the merchant identifier, the merchant reference token, the consumer identifier and the additional information (the information indicative of the one or more limits) in accordance with the modification request. Moreover, the modification request may comprise at least one of a request to modify the information indicative of the one or more limits, or a request to delete the association between the merchant M and the consumer C. In this latter case, if any further transaction requests are received from merchant M using the deleted merchant reference token, those transactions will be refused. This further enhances the level of control the consumer C has over the association, since the consumer C can remove the association at any time.

Alternatively or in addition, according to embodiments of the disclosure a consumer C can securely log into a program or application linked to the apparatus 2002 in order to view a list of associations which have been created. That is, a consumer C can provide information, such as a password or the like, in order to access a secure region of a program or application specific to that consumer C on a consumer electronic device. Once the consumer C has been authenticated in this manner, the apparatus 2002 is configured to securely provide the electronic device with information regarding the links and associations between the consumer C and respective merchants M which have been created. In this manner, the consumer C can retain awareness of the associations which have been created. Moreover, in certain embodiments, the consumer C is able to request modifications to the additional information and/or the association through the application as required. In an embodiment, the application is provided as part of the consumer's banking application. The banking application (which is in secure communication with the financial institution providing the banking application) thus allows both the setup of a new bank account link (by allowing the first token to be received by the financial institution) and allows viewing and modification of that link at a later time. A suitable application programming interface (API) may be provided to financial institutions who wish to participate in the described merchant / bank account linking by the operator of the apparatus 2002. This allows each individual banking application (different financial institutions typically have their own respective banking applications) to be provided with the functionality to securely communicate with the apparatus 2002 and to thus allow account links to be viewed and modified. Furthermore, the use of a suitable API allows this functionality to be implemented in a way which works with the individual banking application concerned (e.g. in terms of graphical user interface requirements, etc.).

In certain examples, a consumer C may have more than one association with a single merchant M and/or may have a plurality of associations with a plurality of merchants M. As such, it will be appreciated that the consumer C may request modification of a single such request, or may request universal modification of the associations (such as changing the upper allowable transaction value for all associations).

Now, while certain embodiments of the disclosure have been described with reference to a transaction between a merchant M and a consumer C, it will be appreciated that the present disclosure is not particularly limited in this regard. That is, embodiments of the disclosure may be applied more generally to any exchange of messages whereby a first party wishes to form an association with a second party. For example, embodiments of the disclosure may be applied to a situation requiring the secure exchange of certain messages or information between a first party and a second party in a communication network or the like.

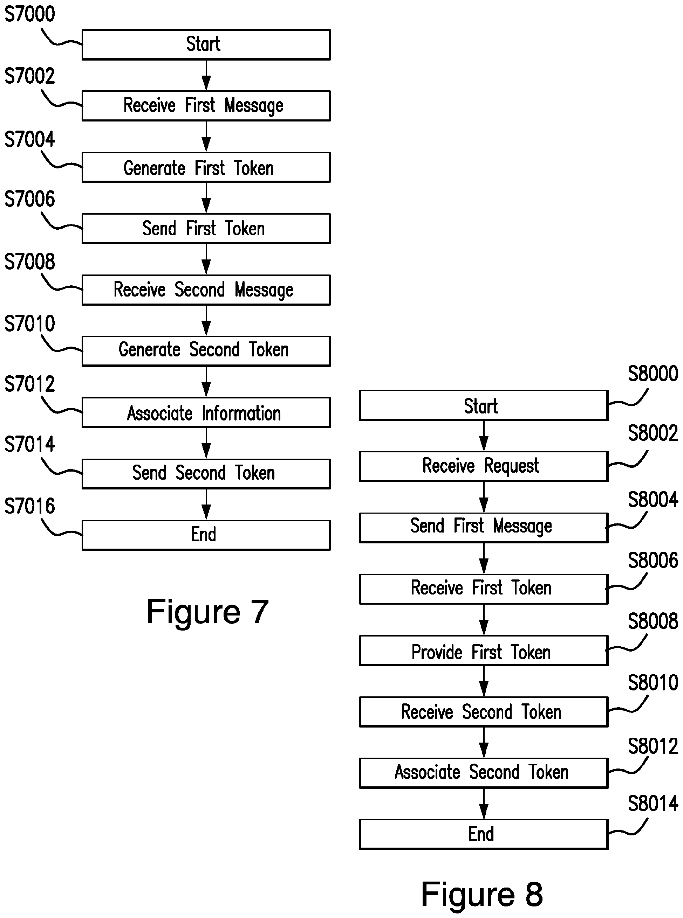

Hence, more generally, method of forming an association between a first and second party is provided by the present disclosure, as described with reference to Figure 7 below.

### Method:

Figure 7 illustrates a method of associating a first party and a second party according to embodiments of the disclosure. The method steps are performed by the processor circuitry 1006 of device 1000 when device 1000 acts as device 2002, for example.

The method begins at step S7000 and proceeds to step S7002.

In step S7002, the method comprises receiving a first electronic message comprising information indicative of the first party. It will be appreciated that the method of receiving the first electronic message and the information indicative of the first party is not particularly limited, and may vary in accordance with the situation to which the embodiments of the disclosure are applied. However, the information is sufficient in order to enable identification of the party who sent the first electronic message. As such, the information indicative of the first party may comprise the name of the first party, a code representative of the first party, or any other suitable indicator (such as a merchant identifier described above with reference to Figure 3, for example).

Once the electronic message comprising information indicative of the first party has been received, the method proceeds to step S7004.

In step S7004, the method comprises generating a first electronic token in response to receiving the information indicative of the first party. It will be appreciated that the method of generating the first electronic token, and the form of the first electronic token itself, are not particularly limited. That is, any such method of generating the first electronic token may be used in accordance with embodiments of the disclosure.

Once the first electronic token has been generated in step S7004, the method proceeds to step S7006.

In step S7006, the method comprises sending the first electronic token to the first party. That is, the first electronic token which has been generated in step S7004 is sent to the first party (via communication circuitry 1004, for example). The method of sending the first electronic token to the first party is not particularly limited. That is, the first electronic token may be sent to the first party through any appropriate wired or wireless connection in accordance with the situation.

Once the first electronic token has been sent to the first party, the method proceeds to step S7008.

In step S7008, the method comprises receiving one or more second electronic messages from the second party, the one or more second electronic messages comprising the first electronic token and information indicative of the second party. The information indicative of the second party may comprise an IBAN of a bank account belonging to the second party, for example. That is, in step S7008, the method comprises receiving the first electronic token which was generated in step S7004 from the second party (the second party being the party with which the first party wishes to form an association). In other words, the fact that the second party supplies the first electronic token along with the information indicative of the second party enables the identification of that party as the party with which the first party wishes to form the association. However, the method by which the second party receives the first electronic token from the first party is not particularly limited in accordance with the present disclosure.

Once the one or more second electronic messages have been received from the second party, the method proceeds to step S7010.

In step S7010, the method comprises generating a second electronic token in response to receiving the first electronic token and the information indicative of the second party from the second party. The second electronic token is generated such that it does not comprise any specific information regarding the first or the second party which is understandable to an unauthorised party. In particular, the information indicative of the second party (e.g. IBAN) cannot be determined using the second token (even by the first party). In embodiments of the disclosure, the second token is distinct from the first electronic token generated in step S7004.

Once the second electronic token has been generated according to step S7010, the method proceeds to step S7012.

In step S7012, the method comprises associating the information indicative of the first party, the information indicative of the second party and the second electronic token, the first party being identified on the basis of the first electronic token.

Once the association has been generated, the method proceeds to step S7014.

In step S7014, the method comprises sending the second electronic token to the first party. As noted above, the information indicative of the second party (e.g. IBAN) cannot be derived by the first party (or any other unauthorised party) from the second electronic token formed in step S7010. Accordingly, no sensitive information regarding the second party is sent to the first party when forming the association. However, the second electronic token is unique to the association between the first and second party. Accordingly, the second electronic token enables the first party to reference the association between the first and second party in any future exchange between the first and second party.

The method then proceeds to, and ends with, step S7016.

### Method:

Figure 8 illustrates a method of associating a first party and a second party according to embodiments of the disclosure. The method steps are performed by the processor circuitry 1006 of device 1000 when device 1000 is a data processing apparatus controlled by a distributor 2004, for example.

The method begins at step S8000 and proceeds to step S8002.

In step S8002, the method comprises receiving a request (e.g. via user input unit 1002 or communication circuitry 1004) from the second party to form the association. It will be appreciated that the method of receiving the request from the second party is not particularly limited in accordance with embodiments of the disclosure Moreover, the request may be received directly from the second party or, alternatively, may be received having been sent by a device on behalf of the second party. The request itself may take any suitable form, such as the request to link a consumer account with a merchant described with reference to Figure 5 of the present disclosure, provided the request received from the second party indicates the intention of the second party to form an association with the first party.

Once the request has been received, the method proceeds to step S8004.

In step S8004, the method comprises sending a first electronic message comprising the information indicative of the first party. This request may, in certain examples, be a link request electronic message or the like described with reference to the example of Figure 5 of the present disclosure. However, the present disclosure is not particularly limited in this regard. That is, provided the first electronic message comprises information enabling the first party to be identified, the present disclosure is not particularly limited. The first electronic message may, according to certain embodiments of the disclosure, be sent by the communication circuitry 1004 of device 1000, for example.

Once the first electronic message has been sent, the method proceeds to step S8006.

In step 8006, the method comprises receiving the first electronic token (e.g. via communication circuitry 1004) in response to sending the request.

Once the first electronic token has been received, the method proceeds to step S8008.

In step S8008, the method comprises providing the first electronic token to the second party. In certain examples, the first electronic token may be provided to the second party using communication circuitry 1004 (e.g. from distributor to financial institution via the server hosting a merchant's website and the banking application executed on a user's smart phone). However, the present disclosure is not particularly limited in this regard, and any suitable method of providing the first electronic token to the second party may be used in accordance with the situation to which the embodiments of the disclosure are applied. Possession of the first electronic token by the second party enables the intention to form the association between the first and second party to be established in accordance with embodiments of the disclosure.

Once the first electronic token has been provided to the second party, the method proceeds to step S8010.

In step S8010, the method comprises receiving the second electronic token (via communication circuitry 1004). As previously explained, the second electronic token is unique to the association between the first party and the second party, and can therefore be used in order to reference the association which has been created.

Once the second electronic token has been received, the method proceeds to step S8012.

In step S8012, the method comprises associating the second electronic token with the second party and associated first party. According to certain embodiments of the disclosure, the method of associating the second electronic token with the second party may comprise secure storage of the second electronic token with information indicative of the first and second parties (e.g. in the form of a look up table like that of Figure 4 stored in the storage medium 1010.

The method then proceeds to, and ends with, step S8014.

### Method:

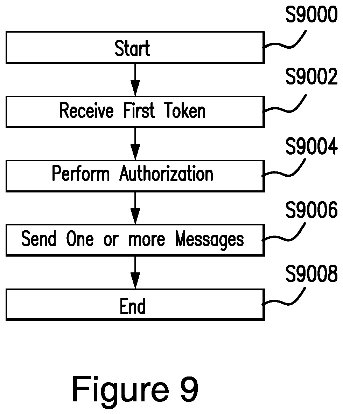

Figure 9 illustrates a method of associating a first party and a second party according to embodiments of the disclosure. The method steps are performed by the processor circuitry 1006 of device 1000 when device 1000 is a data processing apparatus controlled by a financial institution 2006, for example.

The method begins at step S9000, and proceeds to step S9002.

In step S9002, the method comprises receiving the first electronic token (e.g. via communication circuitry 1004), the first electronic token having been previously provided to the second party.

Once the first electronic token has been received, the method proceeds to step S9004.

In step S9004, the method according to embodiments of the disclosure comprises performing an authorization process to determine authorization of the second party to form the association. According to embodiments of the disclosure, the authorization is sought as a mechanism for establishing the intention of the second party to form the association with the first party. The method of performing the authorisation of the second party is not particularly limited. For example, said authorisation could be received from the second party through biometric verification, password verification or the like (e.g. as previously explained with respect to S3016 of Figure 3).

Once the authorisation process has been performed, the method proceeds to step S9006.

In step S9006, the method comprises sending one or more electronic messages comprising information indicative of the first electronic token and information indicative of the second party so as to allow generation of the second electronic token for associating the second party with the first party. In certain examples, the first electronic token and the information indicative of the second party may be sent in a single electronic message. However, in other examples, the first electronic token may be sent prior to sending the information indicative of the second party, with the information indicative of the second party being sent only once secure receipt of the first electronic token has been established. The present disclosure is not particularly limited in this regard.

Once the one or more electronic messages have been sent, the method proceeds to, and ends with, step S9008.

### Computer Program:

Furthermore, according to embodiments of the disclosure, the processing circuitry 1006 of the apparatus 1000 (acting as apparatus 2002 or as a data processing apparatus controlled by a distributor 2004 or financial institution 2006) may be a microprocessor carrying out computer instructions, or may be a portion of an Application Specific Integrated Circuit. In this situation, computer instructions are stored on a storage medium which may be a magnetically readable medium, optically readable medium or solid state type circuitry. The storage medium may be integrated into the device 1000, such as storage 1010, or may be separate to the device 1000 and connected thereto using either a wired or wireless connection. The computer instructions may be embodied as computer software that contains computer readable code which, when executed by the processor circuitry 1006, configures the processor circuitry 1006 to perform the method according to embodiments of the disclosure described with reference to Figures 7, 8 and 9 above.

Accordingly, in so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

### Clauses:

Aspects of the present disclosure may further be arranged in accordance with the following numbered clauses:
1. A method of associating a first party and a second party, the method comprising:
   receiving a first electronic message comprising information indicative of the first party;
   generating a first electronic token in response to receiving the information indicative of the first party;
   sending the first electronic token to the first party;
   receiving one or more second electronic messages from the second party, the one or more second electronic messages comprising the first electronic token and information indicative of the second party;
   generating a second electronic token in response to receiving the first electronic token and the information indicative of the second party from the second party;
   associating the information indicative of the first party, the second party and the second electronic token, the first party being identified on the basis of the first electronic token; and
   sending the second electronic token to the first party.
2. The method according to Clause 1, further comprising: receiving an electronic transaction request comprising information indicative of a transaction requesting party, an electronic token and a requested transaction between the transaction requesting party and the second party;
   authorizing the requested transaction when it is determined that the transaction requesting party and the received electronic token match, respectively, the first party and the second electronic token associated with the second party.
3. The method according to Clause 1 or 2, wherein the one or more second electronic messages comprise information indicative of one or more limits, and the method comprises associating the information indicative of the one or more limits with the associated information indicative of the first party, the second party and the second electronic token.
4. The method according to Clause 3, further comprising: receiving an electronic transaction request comprising information indicative of a transaction requesting party, an electronic token and a requested transaction between the transaction requesting party and the second party;
   authorizing the requested transaction when it is determined that the transaction requesting party and the received electronic token match, respectively, the first party and the second electronic token associated with the second party and that the requested transaction conforms to the one or more limits associated with the first party, second party and second electronic token.
5. The method according to Clause 3, wherein the information indicative of the one or more limits comprises at least one of a limit on a transaction amount, a limit of the frequency of transactions, a limit on the number of transactions, or a limit of the type of goods associated with the transaction..
6. The method according to Clause 3, further comprising:
   receiving a modification request from the second party; and
   modifying the association between the information indicative of the first party, the second party, the second electronic token and the one or more limits in accordance with the modification request.
7. The method according to Clause 6, wherein the modification request comprises at least one of a request to modify the information indicative of the one or more limits and a request to delete the association between the first party, the second party, the second electronic token and the information indicative of the one or more limits.
8. The method according to Clause 2 or 4, further comprising:
   sending a third electronic message to at least the transaction requesting party comprising information indicative of a refusal when the transaction request party and the received electronic token do not match, respectively, the first party and the second electronic token associated with the second party.
9. The method according to Clause 4, further comprising:
   sending a fourth electronic message to the second party, the fourth electronic message comprising information requesting authorization of the requested transaction, when the transaction requesting party and the received electronic token match, respectively, the first party and the second electronic token associated with the second party and when the requested transaction does not conform to the one or more limits;
   receiving a fifth electronic message indicative of authorization information from the second party; and
   authorizing the requested transaction when the authorization information indicates that authorization has been granted by the second party.
10. The method according to any preceding Clause, wherein, in response to receiving the first electronic message, the method comprises verifying a digital signature of the first electronic message prior to generating the first electronic token.
11. The method according to any preceding Clause, wherein, in response to receiving the one or more second electronic messages, the method comprises verifying a digital signature of the one or more second electronic message prior to generating the second electronic token.
12. An apparatus for associating a first party and a second party, the apparatus comprising:
   circuitry configured to:
   receive a first electronic message comprising information indicative of the first party;
   generate a first electronic token in response to receiving the information indicative of the first party;
   send a first electronic token to the first party;
   receive one or more second electronic messages from the second party, the one or more second electronic messages comprising the first electronic token and information indicative of the second party;
   generate a second electronic token in response to receiving the first electronic token and the information indicative of the second party from the second party;
   associate the information indicative of the first party, the second party and the second electronic token, the first party being identified on the basis of the first electronic token; and
   send the second electronic token to the first party.
13. A computer program product comprising instructions which, when the program is executed by a computer, cause the computer to carry out a method of associating a first party and a second party, the method comprising:
   receiving a first electronic message comprising information indicative of the first party;
   generating a first electronic token in response to receiving the information indicative of the first party;
   sending the first electronic token to the first party;
   receiving one or more second electronic messages from the second party, the one or more second electronic messages comprising the first electronic token and information indicative of the second party;
   generating a second electronic token in response to receiving the first electronic token and the information indicative of the second party from the second party;
   associating the information indicative of the first party, the second party and the second electronic token, the first party being identified on the basis of the first electronic token; and
   sending the second electronic token to the first party.
14. A method of associating a first party and a second party, the method comprising:
   receiving a request from the second party to form the association;
   sending a first electronic message comprising information indicative of the first party;
   receiving a first electronic token in response to sending the request;
   providing the first electronic token to the second party;
   receiving a second electronic token; and
   associating the second electronic token with the second party.
15. An apparatus for associating a first party and a second party, the apparatus comprising circuitry configured to:
   receive a request from the second party to form the association;
   send a first electronic message comprising information indicative of the first party;
   receive a first electronic token in response to sending the request;
   provide the first electronic token to the second party;
   receive a second electronic token; and
   associate the second electronic token with the second party.
16. A computer program product comprising instructions which, when the program is executed by a computer, cause the computer to carry out a method of associating a first party and a second party, the method comprising:
   receiving a request from the second party to form the association;
   sending a first electronic message comprising information indicative of the first party;
   receiving a first electronic token in response to sending the request;
   providing the first electronic token to the second party;
   receiving a second electronic token; and
   associating the second electronic token with the second party.
17. A method of associating a first party and a second party, the method comprising:
   receiving a first electronic token, the first electronic token having been previously provided to the second party;
   performing an authorization process to determine authorization of the second party to form the association; and
   sending one or more electronic messages comprising information indicative of the first electronic token and information indicative of the second party so as to allow generation of a second electronic token for associating the second party with the first party, the first party being identifiable on the basis of the first electronic token.
18. An apparatus for associating a first party and a second party, the apparatus comprising circuitry configured to:
   receive a first electronic token, the first electronic token having been previously provided to the second party;
   perform an authorization process to determine authorization of the second party to form the association; and
   send one or more electronic messages comprising information indicative of the first electronic token and information indicative of the second party so as to allow generation of a second electronic token for associating the second party with the first party, the first party being identifiable on the basis of the first electronic token.
19. A computer program product comprising instructions which, when the program is executed by a computer, cause the computer to carry out a method of associating a first party and a second party, the method comprising:
   receiving a first electronic token, the first electronic token having been previously provided to the second party;
   performing an authorization process to determine authorization of the second party to form the association; and
   sending one or more electronic messages comprising information indicative of the first electronic token and information indicative of the second party so as to allow generation of a second electronic token for associating the second party with the first party, the first party being identifiable on the basis of the first electronic token.

Numerous modifications and variations of the present disclosure are possible in light of the above teachings. It is therefore to be understood that within the scope of the appended claims, the disclosure may be practiced otherwise than as specifically described herein.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. A method of associating a first party and a second party, the method comprising:
receiving a first electronic message comprising information indicative of the first party;
generating a first electronic token in response to receiving the information indicative of the first party;
sending the first electronic token to the first party;
receiving one or more second electronic messages from the second party, the one or more second electronic messages comprising the first electronic token and information indicative of the second party;
generating a second electronic token in response to receiving the first electronic token and the information indicative of the second party from the second party;
associating the information indicative of the first party, the second party and the second electronic token, the first party being identified on the basis of the first electronic token; and
sending the second electronic token to the first party.

2. The method according to Claim 1, further comprising: receiving an electronic transaction request comprising information indicative of a transaction requesting party, an electronic token and a requested transaction between the transaction requesting party and the second party;
authorizing the requested transaction when it is determined that the transaction requesting party and the received electronic token match, respectively, the first party and the second electronic token associated with the second party.

3. The method according to Claim 1 or 2, wherein the one or more second electronic messages comprise information indicative of one or more limits, and the method comprises associating the information indicative of the one or more limits with the associated information indicative of the first party, the second party and the second electronic token.

4. The method according to Claim 3, further comprising: receiving an electronic transaction request comprising information indicative of a transaction requesting party, an electronic token and a requested transaction between the transaction requesting party and the second party;
authorizing the requested transaction when it is determined that the transaction requesting party and the received electronic token match, respectively, the first party and the second electronic token associated with the second party and that the requested transaction conforms to the one or more limits associated with the first party, second party and second electronic token.

5. The method according to Claims 3 or 4, wherein the information indicative of the one or more limits comprises at least one of a limit on a transaction amount, a limit of the frequency of transactions, a limit on the number of transactions, or a limit of the type of goods associated with the transaction..

6. The method according to Claim 3, further comprising:
receiving a modification request from the second party; and
modifying the association between the information indicative of the first party, the second party, the second electronic token and the one or more limits in accordance with the modification request.

7. The method according to Claim 6, wherein the modification request comprises at least one of a request to modify the information indicative of the one or more limits and a request to delete the association between the first party, the second party, the second electronic token and the information indicative of the one or more limits.

8. The method according to Claims 2 or 4, further comprising:
sending a third electronic message to at least the transaction requesting party comprising information indicative of a refusal when the transaction request party and the received electronic token do not match, respectively, the first party and the second electronic token associated with the second party.

9. The method according to Claim 4, further comprising:
sending a fourth electronic message to the second party, the fourth electronic message comprising information requesting authorization of the requested transaction, when the transaction requesting party and the received electronic token match, respectively, the first party and the second electronic token associated with the second party and when the requested transaction does not conform to the one or more limits;
receiving a fifth electronic message indicative of authorization information from the second party; and
authorizing the requested transaction when the authorization information indicates that authorization has been granted by the second party.

10. The method according to any preceding Claim, wherein, in response to receiving the first electronic message, the method comprises verifying a digital signature of the first electronic message prior to generating the first electronic token.

11. The method according to any preceding Claim, wherein, in response to receiving the one or more second electronic messages, the method comprises verifying a digital signature of the one or more second electronic message prior to generating the second electronic token.

12. An apparatus for associating a first party and a second party, the apparatus comprising:
circuitry configured to:
receive a first electronic message comprising information indicative of the first party;
generate a first electronic token in response to receiving the information indicative of the first party;
send a first electronic token to the first party;
receive one or more second electronic messages from the second party, the one or more second electronic messages comprising the first electronic token and information indicative of the second party;
generate a second electronic token in response to receiving the first electronic token and the information indicative of the second party from the second party;
associate the information indicative of the first party, the second party and the second electronic token, the first party being identified on the basis of the first electronic token; and
send the second electronic token to the first party.

13. A computer program product comprising instructions which, when the program is executed by a computer, cause the computer to carry out a method of associating a first party and a second party, the method comprising:
receiving a first electronic message comprising information indicative of the first party;
generating a first electronic token in response to receiving the information indicative of the first party;
sending the first electronic token to the first party;
receiving one or more second electronic messages from the second party, the one or more second electronic messages comprising the first electronic token and information indicative of the second party;
generating a second electronic token in response to receiving the first electronic token and the information indicative of the second party from the second party;
associating the information indicative of the first party, the second party and the second electronic token, the first party being identified on the basis of the first electronic token; and
sending the second electronic token to the first party.

14. A method of associating a first party and a second party, the method comprising:
receiving a request from the second party to form the association;
sending a first electronic message comprising information indicative of the first party;
receiving a first electronic token in response to sending the request;
providing the first electronic token to the second party;
receiving a second electronic token; and
associating the second electronic token with the second party.

15. A method of associating a first party and a second party, the method comprising:
receiving a first electronic token, the first electronic token having been previously provided to the second party;
performing an authorization process to determine authorization of the second party to form the association; and
sending one or more electronic messages comprising information indicative of the first electronic token and information indicative of the second party so as to allow generation of a second electronic token for associating the second party with the first party, the first party being identifiable on the basis of the first electronic token.
